# EUROPÄISCHE PATENTSCHRIFT

(11) **EP 0 777 143 B1**
(45) Veröffentlichungstag und Bekanntmachung des Hinweises auf die Patenterteilung: **25.02.2004**
(21) Anmeldenummer: 96117565.0
(22) Anmeldetag: 02.11.1996
(51) Int. Cl.: G02F 1/1333, B60J 3/04, E06B 9/24, B64C 1/14, H02M 7/48

(54) **Schaltungsanordnung zur Erzeugung einer Wechselspannung für eine in ihrer Lichtdurchlässigkeit variierbare Scheibe**
Circuit arrangement for generating an AC voltage for a glass screen having variable transmittance
Agencement de circuit pour la génération d'une tension alternative pour une vitre avec transmissivité variable

(30) Priorität: 01.12.1995 DE 19544744
(43) Veröffentlichungstag der Anmeldung: 04.06.1997
(73) Patentinhaber: KID-Systeme GmbH, 21614 Buxtehude (DE)
(72) Erfinder: Schulz, Stephan,Dipl.-Ing., 21629 Neu Wulmstorf (DE); Dehnke, Christian, 21149 Hamburg (DE)
(74) Vertreter: Hansmann, Dierk, Dipl.-Ing.

(56) Entgegenhaltungen:
- DE-A- 4 328 726
- DE-C- 4 205 099
- US-A- 4 706 177
- US-A- 5 315 099
- PATENT ABSTRACTS OF JAPAN vol. 7, no. 51 (P-179), 26. Februar 1983 & JP 57 198436 A (TOKYO SHIBAURA DENKI), 6. Dezember 1982
- PATENT ABSTRACTS OF JAPAN vol. 15, no. 90 (E-1040), 5. März 1991 & JP 02 303361 A (FUJITSU), 17. Dezember 1990

## Beschreibung

Die Erfindung betrifft eine Schaltungsanordnung zur Erzeugung einer Wechselspannung für eine in ihrer Lichtdurchlässigkeit variierbare Scheibe, die in einem Flugzeug angeordnet ist und die im spannungslosen Zustand lichtundurchlässig und bei Anlegung der Wechselspannung lichtdurchlässig ist, wobei die Versorgung der Schaltungsanordnung aus dem nur begrenzt belastbaren Flugzeug-Bordnetz mit vorgegebener Ausgangs-Gleichspannung erfolgt, und wobei die Scheibe vorzugsweise als Trennelement zwischen zwei Räumen, Kabinen odgl. in einem Flugzeug angeordnet ist,

In ihrer Lichtdurchlässigkeit variierbare Scheiben sind allgemein bekannt. So ist z.B. in der DE 38 16 069 A1 ein Einsatz oder Vorsatz für Fenster oder Türen mit einem lichtdurchlässigen Glas, Kunststoff oder sonstigem lichtdurchlässigen Material beschrieben, insbesondere im Hausbau, Fahrzeug- und Flugzeugbau. Die Lichtdurchlässigkeit dieser Gegenstände ist durch ein zusätzliches Material veränderbar. Zur Variation der Lichtdurchlässigkeit ist das Fenster oder die Tür mit einer flächendeckenden Schicht oder Folie aus Flüssigkristallelementen versehen, wobei mittels einer angelegten Spannung eine durchsichtige und/oder undurchsichtige Schicht gebildet wird.

Weiterhin ist eine Anordnung zur Regelung der Lichtdurchlässigkeit eines Fensters, insbesondere in einem Flugzeug, aus der DE 43 28 726 A1 bekannt. Diese Anordnung besteht aus mindestens einer Steuereinheit mit mindestens einer Flüssigkristallfläche sowie einem Lichtsensor und einem Regler. Eine stufenlose Variation der Lichtdurchlässigkeit der Flüssigkristallfläche ergibt sich dadurch, daß die Wechselspannung bei konstanter Frequenz zwischen Null und einem Höchstwert variierbar ist. Die Steuereinheit, die Flüssigkristallfläche und der Lichtsensor bilden derart einen Regelkreis, daß die mittels des Lichtsensors gemessene Helligkeit mit der am Regler eingegebenen Helligkeit verglichen und die Flüssigkristallfläche dann so angesteuert wird, daß die gemessene Helligkeit mit der eingegebenen übereinstimmt.

Der Erfindung liegt nun die Aufgabe zugrunde, eine Schaltungsanordnung der eingangs beschriebenen Art zu schaffen, bei der die Versorgung aus sicherheitstechnischen Gründen aus dem nur begrenzt belastbaren Flugzeug-Bordnetz sichergestellt ist.

Die Aufgabe wird erfindungsgemäß dadurch gelöst, daß ein DC/DC-Wandler zur Erzeugung von zwei Gleichspannungen aus der Bordnetz-Spannung vorgesehen ist, daß die Werte der erzeugten Gleichspannungen die Ausgangsspannung des Bordnetzes in ihrem Wert übersteigen, daß eine Steuerelektronik zur Erzeugung eines niederfrequenten digitalen Taktsignales vorgesehen ist, welches eine dem DC/DC-Wandler nachgeordnete doppelstufige Leistungs-Gegentaktendstufe ansteuert, und daß die Leistungs-Gegentaktendstufe an ihrem Ausgang eine die Scheibe ansteuernde Wechselspannung ausreichender Größe bereitstellt.

Eine Ausgestaltung der Erfindung ist darin zu sehen, daß Meßglieder vorgesehen sind, die die Betriebszustände der Triebwerke und Landeklappen beim Start bzw. bei der Landung des Flugzeuges erfassen, und daß die Ausgangssignale der Meßglieder einer Auswerteeinheit zur Erzeugung von Steuersignalen für die Steuerelektronik und für die Leistungs-Gegentaktendstufe zugeführt werden, derart, daß beim Start bzw. bei der Landung des Flugzeuges die Leistungs-Gegenendstufe die die Scheibe durchsichtig steuernde Ausgangsspannung bereitstellt. Hierdurch wird vorteilhafterweise ein Automatikbetrieb realisiert, der die Scheibe während der Start- und Landephase des Flugzeuges automatisch durchsichtig schaltet.

Weitere erfindungsgemäße Ausgestaltungen bestehen darin,
- daß der DC/DC-Wandler aus einer Gleichspannung von 17 - 32 Volt zwei Gleichspannungen von +70 Volt und von -70 Volt erzeugt,
- daß die Steuerelektronik ein niederfrequentes digitales Taktsignal von 29 - 33 Hz erzeugt und
- daß die Leistungs-Gegentaktendstufe an ihrem Ausgang eine Wechselspannung von 60 - 70 Volt und eine Frequenz von 29 bis 33 Hz bereitstellt.

Ein wesentlicher Vorteil der Erfindung liegt darin, daß bei Aufnahme von elektrischer Leistung im aktiven Zustand der Scheibe die Spannungs- und Frequenzwerte der erzeugten Wechselspannung drastisch reduziert sind gegenüber einer bisher allgemein verwendeten Wechselspannung von 110 V / 50-60 Hz, die von einem eine vorhandene Netzwechselspannung umsetzenden Netztransformator erzeugt wurde.

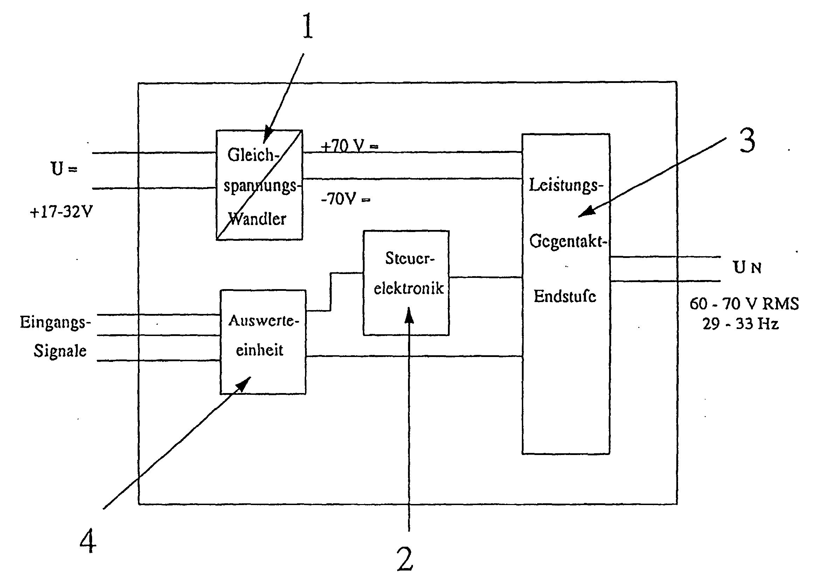

In der Zeichnung ist ein Ausführungsbeispiel der Erfindung in Form eines Blockschaltbildes schematisch dargestellt. Zur Erzeugung der Wechselspannung dienen ein DC/DC-Wandler 1, eine Steuerelektronik 2, eine dem Wandler 1 und der Steuerelektronik 2 nachgeordnete doppelstufige Leistungs-Gegentaktendstufe 3 und eine Auswerteeinheit 4, die die von den zeichnerisch nicht dargestellten Meßgliedern erzeugten Signale verarbeitet und mit ihren Ausgangssignalen die Steuerelektronik 2 und die Leistungs-Gegentaktendstufe 3 ansteuert.

Aus der Gleichspannung von 17 - 32 V DC werden durch den DC/DC-Wandler 1 zwei höhere Gleichspannungen von +70 V und -70 V erzeugt. In der Steuerelektronik 2 wird ein niederfrequentes digitales Taktsignal von 29 bis 33 Hz generiert. Mit diesem Taktsignal wird die doppelstufige Leistungs-Gegentaktendstufe 3 angesteuert, die an ihrem Ausgang eine Wechselspannung von 60 - 70 V und eine Frequenz von 29 - 33 Hz erzeugt. Mit dieser Spannung wird die nicht dargestellte Scheibe angesteuert. Durch die in der Auswerteeinheit 4 erfolgte Auswertung von oben beschriebenen Meßsignalen über die Betriebszustände der Triebwerke und der Landeklappen beim Start und bei der Landung des Flugzeuges sorgt die Steuerelektronik 2 im Automatikbetrieb für die Durchsichtigkeit der Scheibe bei Start und Landung des Flugzeuges.

## Patentansprüche

1. Schaltungsanordnung zur Erzeugung einer Wechselspannung für eine in ihrer Lichtdurchlässigkeit variierbare Scheibe, die in einem Flugzeug angeordnet ist und die im spannungslosen Zustand lichtundurchlässig und bei Anlegung der Wechselspannung lichtdurchlässig ist, wobei die Versorgung der Schaltungsanordnung aus dem nur begrenzt belastbaren Flugzeug-Bordnetz mit vorgegebener Ausgangs-Gleichspannung erfolgt, und wobei die Scheibe vorzugsweise als Trennelement zwischen zwei Räumen, Kabinen odgl. in einem Flugzeug angeordnet ist, **dadurch gekennzeichnet, daß** ein DC/DC-Wandler (1) zur Erzeugung von zwei Gleichspannungen aus der Bordnetz-Spannung vorgesehen ist, daß die Werte der erzeugten Gleichspannungen die Ausgangsspannung des Bordnetzes in ihrem Wert übersteigen, daß eine Steuerelektronik (2) zur Erzeugung eines niederfrequenten digitalen Taktsignales vorgesehen ist, welches eine dem DC/DC-Wandler (1) nachgeordnete doppelstufige Leistungs-Gegentaktendstufe (3) ansteuert, und daß die doppelstufige Leistungs-Gegentaktendstufe (3) an ihrem Ausgang eine die Scheibe ansteuernde Wechselspannung ausreichender Größe bereitstellt.

2. Schaltungsanordnung nach Anspruch 1, **dadurch gekennzeichnet, daß** Meßglieder vorgesehen sind, die die Betriebszustände der Triebwerke und Landeklappen beim Start bzw. bei der Landung des Flugzeuges erfassen, und daß die Ausgangssignale der Meßglieder einer Auswerteeinheit (4) zur Erzeugung von Steuersignalen für die Steuerelektronik (2) und für die doppelstufige Leistungs-Gegentaktendstufe (3) zugeführt werden, derart, daß beim Start bzw. bei der Landung des Flugzeuges die Leistungs-Gegenendstufe (3) die die Scheibe durchsichtig steuernde Ausgangsspannung bereitstellt.

3. Schaltungsanordnung nach Anspruch 1 oder 2, **dadurch gekennzeichnet, daß** der DC/DC-Wandler (1) aus einer Gleichspannung von 17 - 32 Volt zwei Gleichspannungen von +70 Volt und von -70 Volt erzeugt.

4. Schaltungsanordnung nach Anspruch 1 oder 2, **dadurch gekennzeichnet, daß** die Steuerelektronik (2) ein niederfrequentes digitales Taktsignal von 29 - 33 Hz erzeugt.

5. Schaltungsanordnung nach Anspruch 1 oder 2, **dadurch gekennzeichnet, daß** die Leistungs-Gegentaktendstufe (3) an ihrem Ausgang eine Wechselspannung von 60 - 70 Volt und einer-Frequenz von 29 - 33 Hz bereitstellt.

## Claims

1. Circuit arrangement for generating an alternating voltage for a pane of variable translucency which is disposed in an aircraft and which is opaque in the de-energized state and translucent upon application of the alternating voltage, electrical energy being supplied to the circuit arrangement from the aircraft onboard electrical supply system, which can be loaded only to a limited extent, at a predefined direct output voltage, and the pane preferably being disposed as a separation element between two spaces, cabins or suchlike, in an aircraft, **characterized in that** a DC/DC converter (1) is provided for generating two direct voltages from the onboard electrical supply system voltage, **in that** the values of the generated direct voltages exceed the value of the output voltage of the onboard electrical supply system, **in that** control electronics (2) are provided for generating a low-frequency digital clock signal which drives a dual-stage push-pull power output stage (3) connected downstream from the DC/DC converter (1), and **in that** the dual-stage push-pull power output stage (3) provides at its output an alternating voltage of sufficient magnitude which controls the pane.

2. Circuit arrangement according to Claim 1, **characterized in that** measuring elements are provided which capture the operating states of the engines and landing flaps during starting and landing of the aircraft, and **in that** the output signals of the measuring elements are supplied to an evaluation unit (4) for the purpose of generating control signals for the control electronics (2) and for the dual-stage push-pull power output stage (3), in such a manner that, during starting and landing of the aircraft, the push-pull power output stage (3) provides the output voltage which controls the pane so as to render it transparent.

3. Circuit arrangement according to either of Claims 1 or 2, **characterized in that**, from a direct voltage of 17 - 32 volts, the DC/DC converter (1) generates two direct voltages, of + 70 volts and - 70 volts.

4. Circuit arrangement according to either of Claims 1 or 2, **characterized in that** the control electronics (2) generate a low-frequency digital clock signal of 29 - 33 Hz.

5. Circuit arrangement according to either of Claims 1 or 2, **characterized in that** the push-pull power output stage (3) provides at its output an alternating voltage of 60 - 70 volts and a frequency of 29 - 33 Hz.

## Revendications

1. Dispositif de commutation pour la production d'une tension alternative pour une vitre à transparence variable, qui est agencée dans un avion et qui est opaque à l'état hors tension et transparente lorsqu'une tension alternative lui est appliquée, dans lequel l'alimentation du dispositif de commutation se fait à partir du réseau de bord de l'avion qui ne peut être chargé que de manière limitée et présente une tension continue de sortie prédéterminée, et dans lequel la vitre est agencée de préférence comme élément de séparation entre deux espaces, deux cabines ou similaires dans un avion, **caractérisé en ce qu'**il est prévu un convertisseur CC/CC (1) pour la production de deux tensions continues à partir de la tension du réseau de bord, **en ce que** les valeurs des tensions continues produites dépassent la valeur de la tension de sortie du réseau de bord, **en ce qu'**il est prévu une électronique de commande (2) pour la production d'un signal d'horloge numérique à basse fréquence, qui commande un étage final symétrique de puissance double aménagé après le convertisseur CC/CC (1), et **en ce que** l'étage symétrique final de puissance double (3) délivre, à sa sortie, une tension alternative de grandeur suffisante commandant la vitre.

2. Dispositif de commutation selon la revendication 1, **caractérisé en ce qu'**il est prévu des organes de mesure qui recueillent les états opérationnels des organes de propulsion et des volets d'atterrissage au décollage ou à l'atterrissage de l'avion, et **en ce que** les signaux de sortie des organes de mesure sont acheminés à une unité d'exploitation (4) pour produire des signaux de commande pour l'électronique de commande (2) et pour l'étage symétrique final de puissance double (3) de sorte que, au décollage ou à l'atterrissage de l'avion, l'étage symétrique final de puissance (3) délivre la tension de sortie commandant la vitre à la transparence.

3. Dispositif de commutation selon la revendication 1 ou 2, **caractérisé en ce que** le convertisseur CC/CC (1) produit à partir d'une tension continue de 17 à 32 volts deux tensions continues de +70 volts et de -70 volts.

4. Dispositif de commutation selon la revendication 1 ou 2, **caractérisé en ce que** l'électronique de commande (2) produit un signal d'horloge numérique de basse fréquence de 29 à 33 Hz.

5. Dispositif de commutation selon la revendication 1 ou 2, **caractérisé en ce que** l'étage symétrique final de puissance (3) délivre, à sa sortie, une tension alternative de 60 à 70 volts et une fréquence de 29 à 33 Hz.
